# EUROPEAN PATENT SPECIFICATION

(11) **EP 1 317 237 B1**
(45) Date of publication and mention of the grant of the patent: **31.10.2007**
(21) Application number: 01971561.4
(22) Date of filing: 12.09.2001
(51) Int. Cl.: A61H 3/04, B62B 5/04

(54) **WHEELED WALKER**
GEHWAGEN
DEAMBULATEUR A ROUES

(30) Priority: 12.09.2000 CA 2318028; 21.12.2000 CA 2329485
(43) Date of publication of application: 11.06.2003
(73) Proprietor: Random Products Trust, Bridgetown (BB)
(72) Inventor: HALLGRIMSSON, Bjarki, Ottawa, Ontario K1H 6E5 (CA); DOBBIN, Sarah, Ottawa, Ontario K1R 5H7 (CA); MACMILLAN, Douglas, D., Ottawa, Ontario K1N 6Y1 (CA)
(74) Representative: Leeming, John Gerard
(86) International application number: PCT/CA2001/001304
(87) International publication number: WO 2002/022070

(56) References cited:
- WO-A-98/43591
- DE-A1- 3 042 681
- JP-A- 8 192 602
- JP-A- 10 277 110
- US-A- 6 098 487
- PATENT ABSTRACTS OF JAPAN vol. 1996, no. 11, 29 November 1996 (1996-11-29) & JP 08 192602 A (TERATANI KIYOSHI), 30 July 1996 (1996-07-30)

## Description

### BACKGROUND OF THE INVENTION

This invention relates to a wheeled walker comprising an internal braking system.

Many persons, by reason of age or disability have difficulty in walking without a walking aid. Wheeled walkers are widely used by many such persons to assist in mobility. A wheeled walker typically has a frame mounted on four wheels and a pair of rearwardly extending handle bars which the user can grip for support while walking. The user positions himself between the handle bars behind the walker and pushes the walker forward. The wheels permit the user to roll the walker smoothly over the ground thereby avoiding the laborious action of picking up and moving a non-wheeled walker in step-by-step fashion. The handle bars can be fitted with brake levers that when squeezed by the user, actuate some form of wheel braking mechanism.

Wheeled walkers are routinely equipped with a seating surface that permits the user to rest in the sitting position. The seating surface is usually positioned transversely between the handle bars within the wheel base of the walker to offer a stable platform for sitting. In order to use the seating surface, the user must turn around and sit down in the rearward facing direction, opposite to the normal direction of travel, with his feet resting on the ground. The braking mechanism can be fitted with a locking mechanism to maintain braking engagement with the wheels to prevent the walker from rolling while the user is sitting.

While the provision of a seat to permit the user to rest is a useful feature, it often occurs that the user is too tired to continue walking and requires the assistance of a care-giver continue travel. Conventional wheeled walkers are not adapted to support a seated user and be pushed by a care-giver. In particular, because the user is seated in a rearward facing position between the handlebars, there is very little space between the user and the care-giver, making it difficult for the care-giver to take walking steps without interfering with the feet of the user. Moreover, there is no dedicated means on conventional walkers to support the feet of the user while in the sitting position with the result that the feet are usually dragged across the ground or propped up on a frame member in an unnatural position.

There have been a number of attempts to provide a wheeled apparatus that is useful as a self-propelled walker and also as a care-giver propelled transport chair.

United States Patent No. 5,451,193 discloses a combined wheelchair and walker. In the normal walking position, the seating surface is pivoted up rearwardly toward the seat back to provide space between the handlebars for the user to walk. The user walks in a forward direction pulling the walker behind him. When the user wishes to sit, the seating surface can be flipped down. There is no provision to permit the walker to be pushed by a care-giver. Indeed, the patent discloses that a third party must pull the seated user backwards by pulling on the seat back.

United States Patent No. 5,451,193 discloses a combination wheelchair and walker. While the user or the care-giver can push the apparatus from behind as a conventional walker or transport chair, in order to assume the seated position, the user must walk around to the front of the apparatus, which manoeuvre can be difficult for a physically challenged person.

United States Patent No. 5,605,345 discloses a wheeled apparatus for use both as a walker and a wheelchair. The design has rearward facing handle bars to permit the apparatus to be used as a wheeled walker. The design also has a bi-directional seating arrangement. When the seat is placed in the rearward facing position, it permits the person using the device as a walker to rest in a seated position by turning around and sitting down in the rearward facing direction with his feet resting on the ground. When the seat is placed in the forward facing position, the apparatus can be used as a conventional wheelchair. The wheelchair design is conventional in that it has large rear wheels with hand-rings that permit the wheelchair to be propelled by the occupant or rearward facing handles to permit the wheelchair to be pushed by a care-giver.

While the design disclosed in United States Patent No. 5,605,345 offers significant advantages, it is not well adapted for use as a walker. Because it is based on a conventional wheelchair design, it is heavy and bulky, making it difficult to manoeuvre in confined locations. Furthermore, the bi-directional seating arrangement uses a frame mounted link arrangement which cannot be practicably adapted to a light walker design. Because the seat back is pivoted to the seat base, the vertical rise of the seat back is limited and accordingly offers only lower back support. Furthermore, when positioned in the walker mode, the seat back obscures the user's view of the ground directly in front of the walker.

Thus, there remains a need for a walking aid that offers all of the functionality of a conventional wheeled walker and can be readily converted for use as a transport chair.

Conventional wheeled walkers are frequently equipped with carry baskets for transporting articles. This feature frees the user's hands for gripping the handle bars while the walker is being propelled and avoids the requirement to place articles on the user's lap while in the seated position. Carry baskets are conventionally mounted between the front frame or front leg members, usually between upper and lower cross-members that brace the leg members against collapse under load. This arrangement has a number of disadvantages.

The positioning of the basket substantially forward of the front leg members undesirably increases the overall length of the walker. This makes the walker difficult to manoeuvre in tight quarters and adversely affects stability, particularly when carrying a heavy load in the basket.

In the forward projecting position, the basket is difficult to access by a user when positioned behind the walker to propel it in the forward direction, as the user must reach forward over the seat to place items in the basket. This motion can be difficult for an elderly or infirm person.

The forward projecting basket position is also undesirable when the user is resting on the seat in the rearward facing position. In this position, the basket is completely out of view of the user. This can lead to a feeling of insecurity when articles such as a purse or other valuables are stored in the basket and cannot be easily monitored by the user. Moreover, the conventional fixed forward projecting basket position makes it impossible for the user to sit on the seating surface in the forward facing position to permit the walker to be propelled as a transport chair by a care-giver.

Some conventional walkers have the carry-basket fixedly mounted under the seating surface such that it does not project substantially forward of the front leg members. Access to the basket is provided by flipping up the seat surface. This arrangement has the disadvantage that the basket cannot be accessed from the front of the walker. Furthermore, under-seat mounted baskets are usually removed from the walker by lifting through the opening when the seat is flipped to a vertical position. Thus, the basket must be limited in size in order to permit removal from the walker with such an arrangement.

There have been attempts to provide for a dual-position carry basket on a walker. One such walker provides a basket fitted with bidirectional hooks at its lower end to engage the lower cross-bar between the front leg members and which rests at it upper end against the upper cross bar. In order to move the basket from the forward facing to the rear facing position, the basket must be physically lifted off the lower cross member, turned around to the rearward facing direction and lowered back onto the lower cross bar. This manoeuvre can be difficult when the basket is full, particularly if the user is elderly or infirm. Furthermore, the nature of the bidirectional mounting inherently limits the size of the basket. In particular, the upper and lower front cross bars are longitudinally spaced due to the rake or angle of the front leg members and the basket must be sized to fit into this limited area.

Thus, there remains a need for a walker having an improved carry basket system.

Conventional walkers have been equipped with handle bar mounted braking system actuators that permit the user to manually apply braking force when walking or to lock the brakes to permit the user to safely assume a seated position. For example, one such system is disclosed in United States Patent No. 5,279,180 and relates to a cable braking system. The actuating mechanism uses a connecting lever to pull the cable when the brake lever is raised to a braking position or depressed to a locked position.

Cable type braking systems are commonly used on walkers which have height adjustable handle bars. In such a case, the flexible cable accommodates the variable length between the brake handle actuator and the wheel mounted braking element. However, cable type braking mechanisms have a number of deficiencies. In particular, the cables require rather precise and periodic adjustment to maintain effective braking action. Moreover, because the cables are routed from the brake handle actuator to the wheels outside of the frame and require some slack to accommodate height adjustability, the resulting loop or bight in the cable is prone to catching or snagging on other objects, a deficiency which is particularly problematic in the case of a folding style walker that is transported in the trunk of a car.

US-A-5 772 234 discloses a walker comprising a pair of front wheels rotatably mounted at lower ends of a pair of upwardly extending tubular front leg members, a pair of rear wheels rotatably mounted at lower ends of a pair of upwardly extending tubular rear leg members, a pair of height adjustable tubular handle bar members, a brake actuator assembly disposed at the upper end of each said handle bar members, and a braking member disposed at the lower end of each said rear leg member adapted to be moved between a first position out of braking engagement with said rear wheel and a second position into braking engagement with said rear wheel.

From WO-A-98/43591 a walker is known that comprises a height adjustable tubular handle bar member, a brake actuator assembly disposed at the upper end of said handle bar member, a braking member adapted to be moved between a first position out of braking engagement with a wheel and a second position into braking engagement with the wheel, and a length adjustable rod member responsive to movement of said brake actuator assembly for moving said braking member between said first and second positions, said rod member extending inside said tubular handle bar member.

There remains a need for a brake actuating system which avoids the problems associated with cable based systems.

In accordance with the present invention, there is provided a walker as defined in the appended claims. The brake actuating linkage is internal of structural members, and is length adjustable.

The invention will be further described below with reference to an exemplary embodiment and the accompanying drawings, in which:
FIG. 1 is a front right perspective view of the walker/transport chair of the present invention with the back rest in the walker position;
FIG. 2 is a right side view of the walker/transport chair of the present invention with the back rest in the walker position;
FIG. 3 is a plan view of the walker/transport chair of the present invention with the back rest in the walker position;
FIG. 4 is a right side view of the walker/transport chair of the present invention with the back rest in the transport chair position;
FIG. 5 is a plan view of the walker/transport chair of the present invention with the back rest in the transport chair position;
FIG. 6 is a right side view of the back rest extension arm;
FIG. 7 is a left side view the back rest extension arm;
FIG. 8 is a perspective view showing the manner in which the backrest is connected to the extension arms;
FIG. 9 is a front view of the cross-bar member;
FIG. 10 is a top plan view of the cross-bar member;
FIG. 11 is a right side view in partial section of the cross-bar member connection details;
FIG. 12 is a side view of the inside of the right brake housing half;
FIG. 13 is a side view of the inside of the left brake housing halt;
FIG. 14 is a left side view of the brake actuator slide;
FIG. 15 is a rear view of the brake actuator slide;
FIG. 16 is a right side view of the brake actuator slide;
FIG. 17 is a side view of the inside of the right brake housing half showing the position of the brake actuator slide;
FIG. 18 is a left side view of the brake lever;
FIG. 19 is a right side view of the brake lever;
FIG. 20 is a side view of the inside of the left brake housing half showing the brake lever in the neutral position;
FIG. 21 is a side view of the inside of the left brake housing half showing the brake lever in the depressed brake locking position;
FIG. 22 is a side view of the inside of the left brake housing half showing the brake lever and the brake actuator slide in the neutral position;
FIG. 23 is a side view of the inside of the left brake housing half showing the brake lever and the brake actuator slide in the raised brake actuating position;
FIG. 24 is a side view of the inside of the left brake housing half showing the brake lever in the depressed brake locking position;
FIG. 25 is a right side view in partial section of the internal brake actuating mechanism of the present invention;
FIG. 26 is a perspective view of the brake wire clamp;
FIG. 27 is a right side view, in partial section showing the brake shoe connection details;
FIG. 28 is a perspective view of the brake shoe;
FIG. 29 is a side view of the brake shoe showing the position of the friction member;
FIG. 30 is a perspective view of the friction member.
FIG. 31 is a front right perspective view of the walker/transport chair of the present invention shown with the carry basket;
FIG. 32 is a front right perspective view of the walker/transport chair of the present invention shown with the carry basket removed;
FIG. 33 is a right side view of the walker/transport chair of the present invention with the carry basket in the retracted position;
FIG. 34 is a plan view of the walker/transport chair of the present invention with the carry basket in the retracted position;
FIG. 35 is a front view of the walker/transport chair of the present invention with the carry basket in the retracted position;
FIG. 36 is a rear view of the walker/transport chair of the present invention with the carry basket in the retracted position;
FIG. 37 is a right side view of the walker/transport chair of the present invention with the carry basket in the extended position;
FIG. 38 is a front right perspective view of the walker/transport chair of the present invention with the back rest in the transport chair position and the carry basket in the retracted position;
FIG. 39 is a plan view of the carry basket for use in the present invention;
FIG. 40 is a front view of the carry basket for use in the present invention;
FIG. 41 is a right side view of the carry basket for use in the present invention;
FIG. 42 is a bottom view of the carry basket for use in the present invention.

### DESCRIPTION OF THE PREFERRED EMBODIMENT

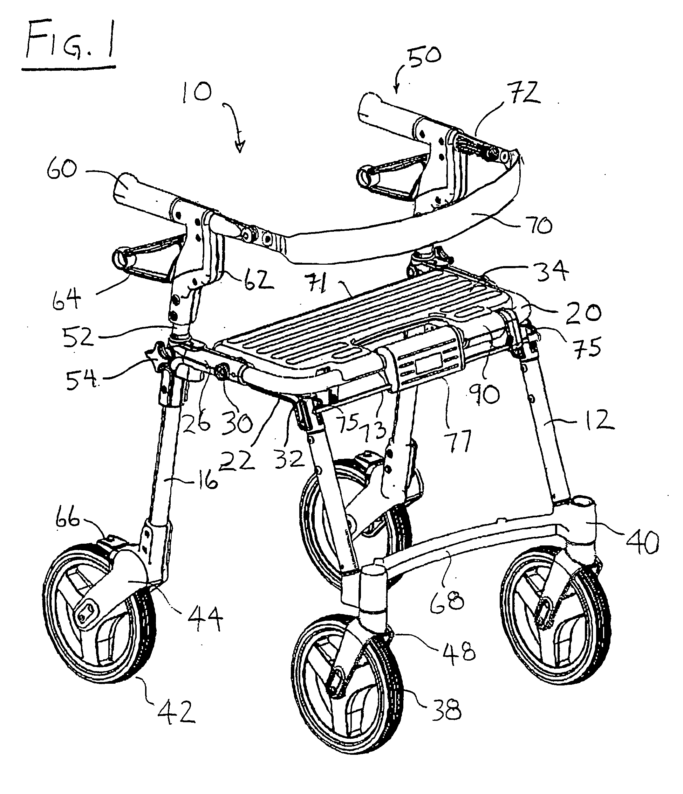

Referring to Figures 1 to 3, there is shown a perspective view of walker/transport chair 10 in the walker configuration. Walker/transport chair 10 has a pair of forward leg members 12, a pair or rearward leg members 16, and a U-shaped transverse seat support member 20. Front leg members 12 are fixedly secured at their upper ends to front leg brackets 22 and rear leg members 16 are fixedly attached at their upper ends to rear leg brackets 26. Front leg brackets 22 are pivotally attached to rear leg brackets 26 at pivot pins 30. In the open or operative position shown in Figures 1 to 3, abutment surfaces 32 at the upper ends of front leg brackets 22 engage the forward lower edge of seat support member 20 when forward leg members 12 are in the open and weight bearing position. Front leg brackets 22 permit the front leg members 12 to be folded toward rear leg members 16 in order to collapse walker/transport chair 10 into a more compact configuration, for example for placement in the trunk of a car.

Walker/transport chair 10 is locked in the open position by means of lock rod 73 which engages projections 75 on front leg brackets 22. Handle 77 is rotatably mounted about transverse seat support member 20 for moving lock rod 73 out of engagement with projections 75. Handle opening 36 is provided in seating surface 34 to provide easy access to handle 77.

Seating surface 34 is horizontally supported at its forward edge 90 by transverse seat support member 20 and provides a stable seating platform. Seating surface 34 is pivotally attached to transverse seat support member 20 such that it can be flipped to a vertical position by pulling up on rear edge 71. This position is particularly useful when the user wishes to move as far forward as possible, for example when reaching ahead of the walker/transport chair to remove objects from a cupboard.

Front leg members 12 are stabilized by cross-bar member 68 which extends horizontally between front leg members 12 and is fixedly secured to the bottom ends of front leg members 12 at end fittings 40. Front wheels 38 are mounted on front fork assemblies having a vertical axle shaft carried in a bearing assembly (not shown) in each end fitting 40 for rotation about the vertical axis to permit front wheels 38 to caster for ease of steering walker/transport chair 10.

Rear wheels 42 are carried at the lower ends of rear leg members 16 on rear fork assemblies 44. Rear fork assemblies 44 are fixedly connected to the lower ends of rear leg members 16.

Push handle assemblies 50 are fixedly attached to the upper ends of telescopic tubes 52 which are slidably received in rear leg members 16. The height of push handle assemblies 50 can be adjusted by extending or retracting telescopic tubes 52 in rear leg members 16. Telescopic tubes 52 have a series of through holes at uniform spacings along their length through which thumb screws 54 can be selectively inserted to fix push handle assemblies 50 at the desired height.

Push handle assemblies 50 comprise handgrips 60, handle housings 62 and brake levers 64. Brake levers 64 are operatively connected to brake shoes 66 by length adjustable rod assemblies housed within telescopic tubes 52 and rear leg members 16. Movement of brake levers 64 will cause brake shoes 66 to move into braking engagement with the tread of rear wheels 42 thereby arresting rolling motion.

When walker/transport chair 10 is in the walker configuration as shown in Figures 1 to 3, the user positions himself behind walker/transport chair 10, and between push handle assemblies 50 facing the forward direction. In order to function as an effective walker, it is desirable that the geometry of the walker be such that the user can position himself far enough forward that his centre of gravity is vertically aligned over handgrips 60. This will permit the user to support a substantial portion of his weight on handgrips 60 when desirable to reduce the weight on the feet. In order to ensure stability of the walker when a substantial vertical load is placed on handgrips 60, the handgrips must be positioned forward of the point of ground contact of rear wheels 42. Moreover, in order to facilitate walking, there must be sufficient room in front of the user to permit him to extend his feet forward in a natural walking gait without interfering with the walker structure, and in particular with the seating surface. Accordingly, the position of seating surface 34 is biased to the front of walker/transport chair 10 such that its rear edge 71 is forward of handgrips 60. In addition, seating surface 34 can be flipped to a vertical position about transverse seat support member 20 as described above. This will provide the user with additional space to move forward between push handle assemblies 50 if desired.

When the user wishes to rest, he simply turns around between push handle assemblies 50, using handgrips 60 for support if required, and sits down on seating surface 34, with his feet on the ground. Backrest 70 is provided to support the user's back while seated on walker/transport chair 10. Backrest 70 is attached to extension arms 72 which are fixed at their rearward ends to push handle assemblies 50.

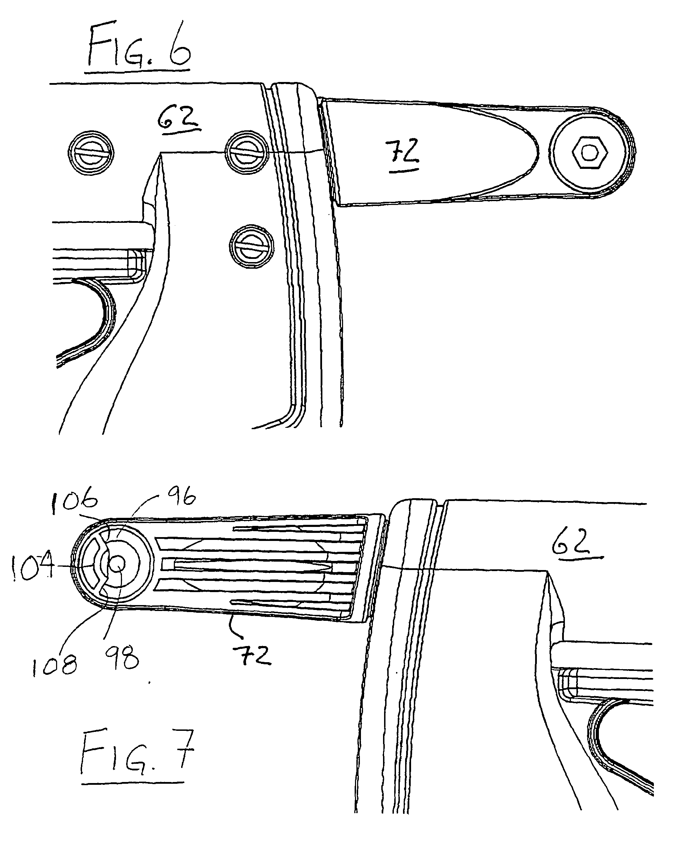

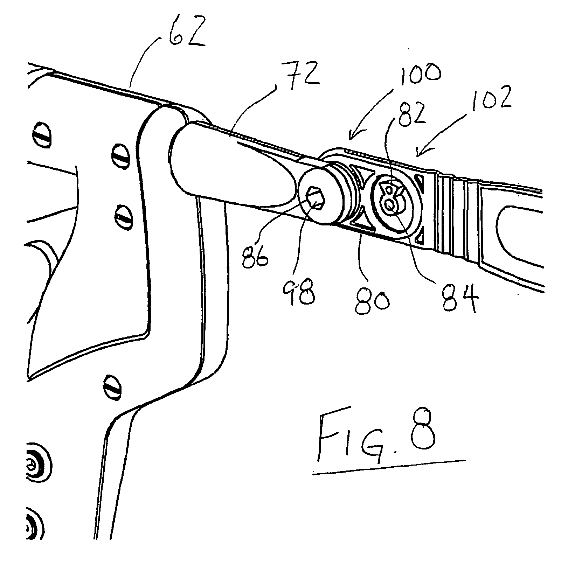

Figures 6, 7 and 8 show the details of extension arms 72 and the manner in which backrest 70 is attached to extension arms 72. Extension arms 72 each have an inward facing part-annular recess 96 with a central cylindrical bore 98 formed therethrough. Backrest 70 has formed therein two mounting points 100 and 102 for attachment to extension arm 72. Mounting point 100 can be used as the point of attachment for a larger user whereas mounting point 102 effectively shortens the length of backrest 72 for a smaller user. The configuration of mounting points 100 and 102 is identical and will be described with reference to point 102 which is visible in Figure 8.

Backrest 70 is formed of a flexible plastic material and at each end has a connection piece 80. Backrest 70 and connection piece 80 can be unitarily moulded of a suitable plastic material that has sufficient flexibility in the central back-supporting area to conform to and support a user's back and sufficient mechanical strength to function as a connection piece. In the alternative, backrest 70 and connection piece 80 can be separate components joined together. Moreover, backrest 70 can be formed of a rigid material such as aluminum if a non-flexible backstrap type backrest is desired. Connection piece 80 has an outwardly projecting key type lug 82 and a central bore 84 formed therethrough. Part-annular recess 96 in extension arm 72 is sized to fit over and closely receive key type lug 82 on backrest 70 with the cylindrical bores 84 and 98 axially aligned. A suitable bolt (not shown) with a smooth shank passes through cylindrical bores 84 and 98 and is fastened with a captive nut (not shown) located in hex-head recess 86 in connection piece 80. In this manner, backrest 70 is pivotally connected to extension arms 72.

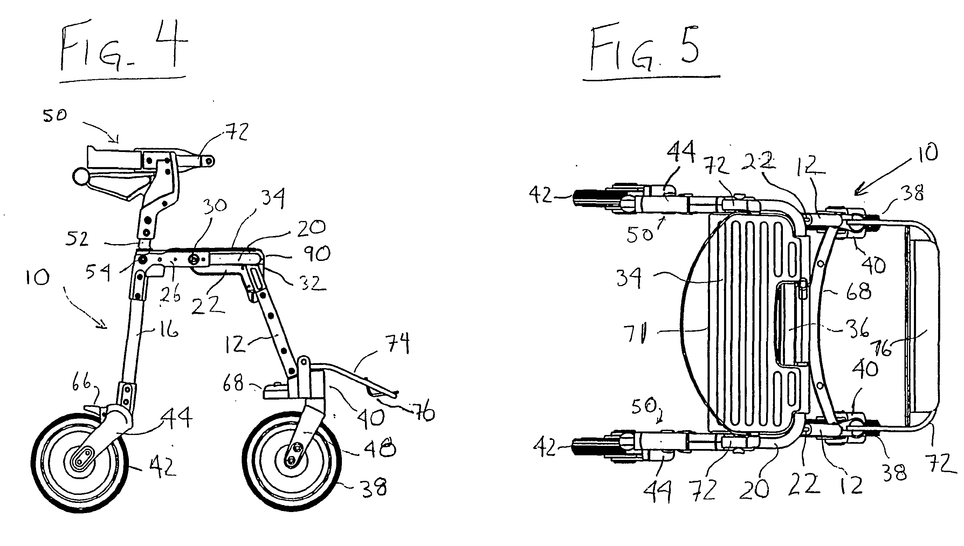

Stop lug 104 projects inwardly of recess 96 in extension arm 72. Abutment surface 106 on stop lug 104 limits forward rotation of backrest 70 by contacting key type lug 82 in connection piece 80 and maintains backrest 70 in the forward facing horizontal position. Similarly, abutment surface 108 limits rotation of backrest 70 by contacting key type lug 82 in connection piece 80 and maintains backrest 70 in the rearward facing horizontal position. This arrangement permits backrest 70 to be manually flipped from the forwardly extending position shown in Figures 1 to 3 for use in the walker mode, to the rearwardly facing position, shown in Figures 4 and 5 for use in the transport chair mode.

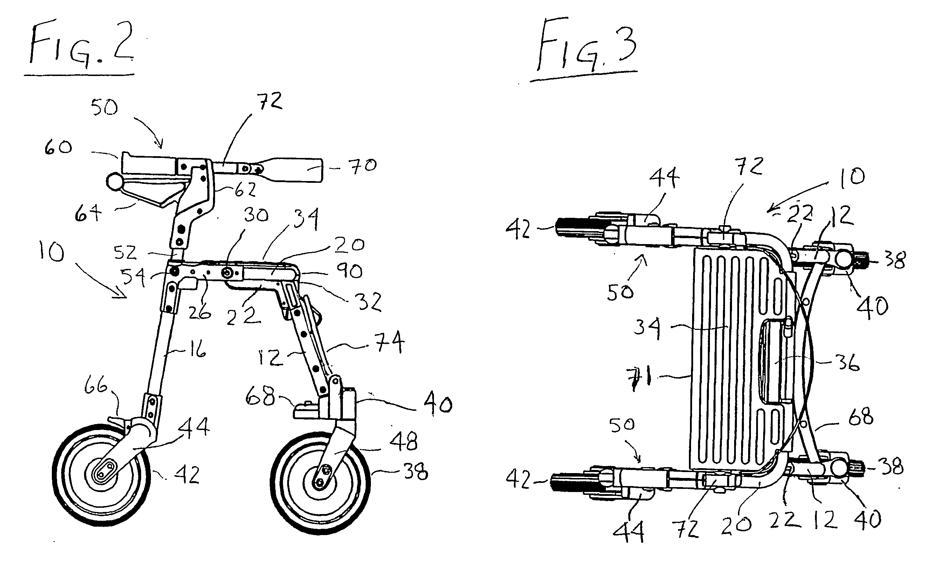

When walker/transport chair 10 is in the transport chair configuration, the user or a care-giver flips backrest 70 to the rearward extending position as shown in Figures 4 and 5. The user positions himself in front of and facing away from walker/transport chair 10 and sits down on seating surface 34 with his back against backrest 70. Footrest 72 is then folded from the stowed position shown in Figures 2 and 3 to the deployed position shown in Figures 4 and 5. The user rests his heels on footrest tray 76 and in that position can be comfortably propelled by the care-giver in the transport chair mode. (Footrest 72 has been omitted from Figure 1 to show greater detail of cross-bar 68). The forward facing seated position is not only useful when the apparatus is being propelled by a care-giver in the transport chair mode, but also permits the apparatus to be positioned close to a table, for example when eating a meal. Conventional walkers in which the user is seated in the rearward facing position are not well suited to this application because the rearward projecting handgrips and the rear wheels limit how close the walker can be placed, while the seating surface is typically positioned far forward of the hangrips.

Conventional walkers usually require a cross-bar between the front leg members to strengthen the frame against collapse when the walker is bearing substantial weight, for example, when the user is seated. A front cross-bar is particularly required where the front leg members are pivotally attached to the frame to permit folding, which pivotal attachment provides little resistance to outward splaying of the legs under load.

For conventional walkers, the presence of a cross-bar between the front legs of the walker typically does not interfere with the user's movements, as the user is positioned behind the walker in both the walking and sitting positions. However, the front cross-bar on a conventional walker interferes with its use as a transport chair. In particular, in order to assume the forward facing sitting position in the transport chair mode, a user must be able to position his heels very close to a point on the ground directly under the front edge of the seating surface. If the user is positioned too far forwards, he tends to lose balance when attempting to assume the seated position, falling backward in an uncontrolled manner onto the seating surface. This can cause the walker to upset resulting in serious injury to the user. Conventional cross-bars are usually positioned well forward of the front edge of the seating surface and accordingly tend to prevent a user from positioning his heels close to a point on the ground directly under the front edge of seating surface.

The walker/transport chair design of the present invention is configured to overcome the limitations of conventional walker frame design. First, as seen in Figure 1 front leg members 12 are positioned at an angle closer to vertical than are most conventional walkers. This minimizes the extent to which the lower ends of front leg members 12, and consequently cross-bar 72, project forward of the forward edge 90 of seating surface 34. However, this has the undesirable effect of shortening the wheelbase and lessening stability. In order to provide for a lengthened wheelbase, the front fork assemblies 48 are not secured axially inside the lower end of front legs 12 as is conventional practice in walker design. Instead, front fork assemblies 48 are secured in end fittings 40 which project forwardly from the lower end of leg members 12, effectively lengthening the wheelbase.

Another feature that enhances its use as a transport chair is the design of cross-bar 68. As best shown in Figures 4 and 5, cross-bar 68 attaches to front leg members 12 at their lower ends, which point is forward of the forward edge 90 of seating surface 34. In order to permit the user to more safely assume the forward-facing seated transport chair position, cross-bar 68 is rearwardly curved such that its central portion is located substantially under the forward edge 90 of seating surface 34. This curved cross-bar arrangement permits the user to place his heels close to a point on the ground directly under the front edge of seating surface, and thereby. While a curved geometry is shown in the drawings, other configurations could be used so long as the cross-bar is configured such that its central portion is located substantially under or behind the forward edge 90 of seating surface 34.

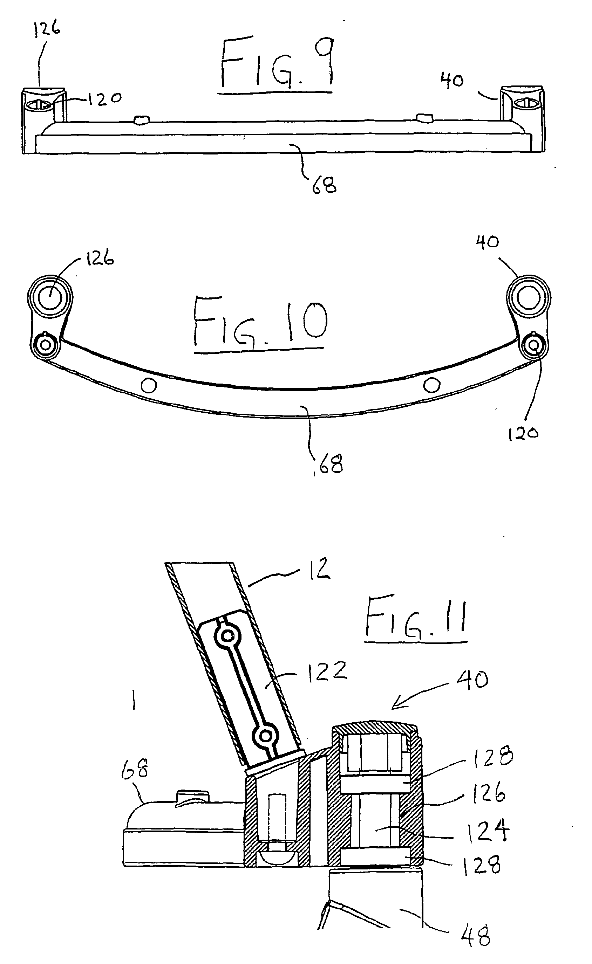

Construction details of cross-bar 68 and end fittings 40 can be seen in Figures 9 to 11. Cross-bar 68 and end fittings 40 are unitarily moulded or cast from a material of suitable strength. For example cross-bar 68 can advantageously be formed of cast aluminum. Cylindrical bores 120 are provided in cross-bar 68 to receive connector piece 122 which is bolted into the lower ends of forward leg member 12. Front fork shaft 124 is vertically received in bore 126 and is rotatable retained by upper and lower bearings 128 fitted in bore 126.

As noted above, the front fork assemblies of conventional walkers are typically inserted directly into the hollow ends of the leg members. The fork mounting shaft is usually carried in a single bearing which is press-fitted into the bottom end of the leg member. This arrangement is prone to failure. In particular, repetitive striking of the wheels into curbs and other obstacles and impact over rough road surfaces has a tendency to deform and widen the lower end of the leg members into which the bearing is pressed. This can cause the bearing, and the entire fork/wheel assembly to fall out of the bottom of the leg member. By mounting the front fork assemblies 48 to end fittings 40 fitted with two bearings, rather than directly into a single bearing in the bottom end of the leg, the ability of the fork assemblies and the lower leg mounting hardware to absorb shock, without failure is greatly improved.

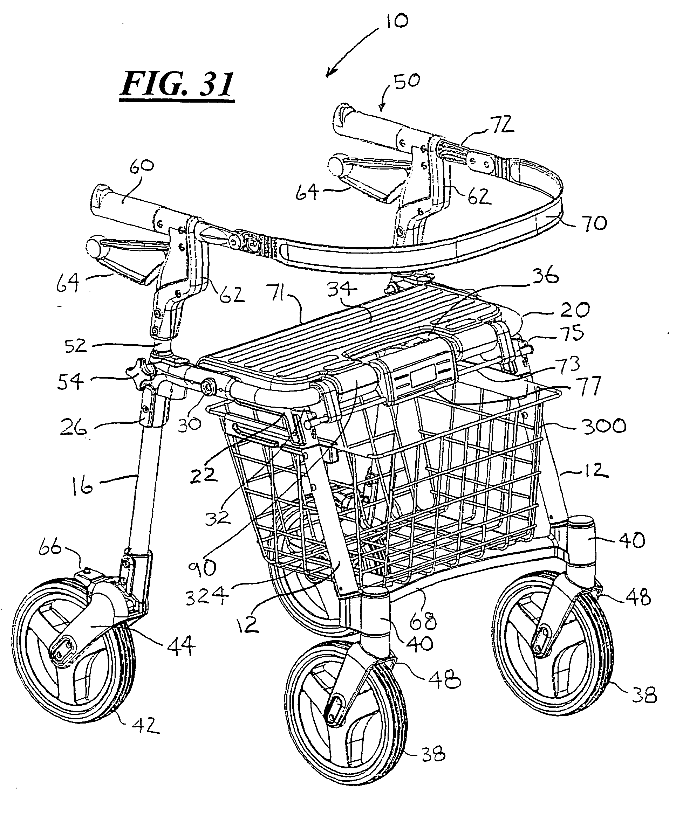

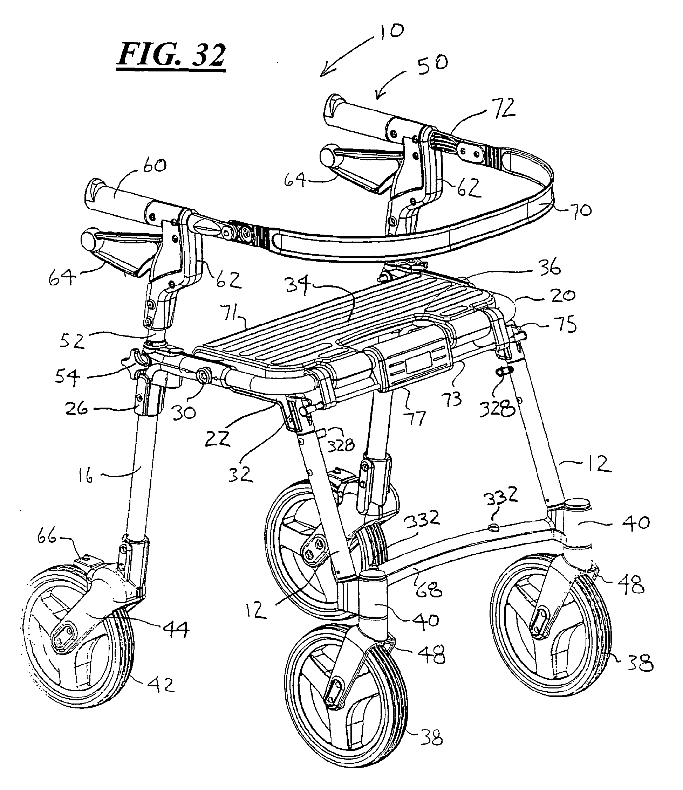

Referring to Figures 31 to 37, there is shown a perspective view of walker/transport chair 10 in the walker configuration with the carry basket arrangement. The carry basket has been omitted from Figure 32 in order to more clearly show the carry basket mounting arrangement as described below.

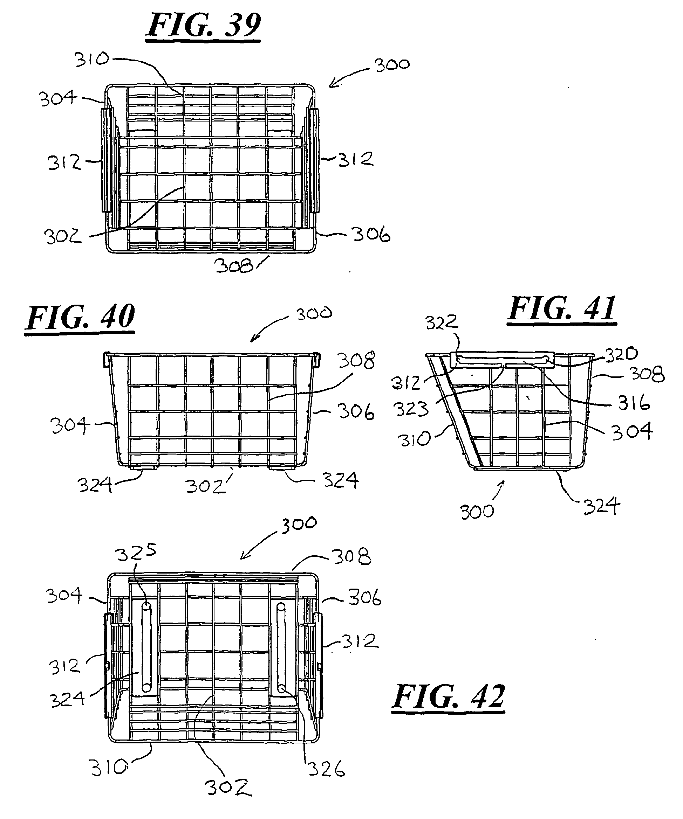

Referring now to Figures 39 to 42, basket 300 is formed of a wire-cage type construction and has bottom panel 302, generally vertical side panels 304 and 306, substantially vertical front panel 308 and inclined rear panel 310. Basket 300 is open at its upper end to permit articles to be placed into basket 300 onto bottom panel 302.

The upper edges of side panels 304 and 306 are fitted with rail members 312. Rail members 312 are formed of plastic or other suitable material in an inverted "U" shape and are fitted over and extend down either side of the upper edge of side panels 304 and 306. The rail members can be secured to the wire-cage construction by through bolts, clips or other suitable fastening means. In the alternative, rail members 312 can be integrally formed with basket 300. Grooves 316 are formed along the length of the outer facing surfaces of rail members 312. Grooves 316 have upward projecting detents 320 and 322 formed at either end and mounting notches 323.

Slide members 324 are fixed to the downward facing surface of bottom panel 302. Slide members 324 can be formed of the same material as rail members 312. Detents 325 and 326 comprise shallow circular depressions at each end of slide members 324.

Referring now to Figure 32, pins 328 project inwardly from the upper ends of forward leg members 12. Pins 328 can each be a simple fixed boss or can comprise a cylindrical or wheel-like bearing member mounted for rotation about a horizontal axis. Posts 332 project upwardly from the left and right sides of cross bar 68.

Carry basket 300 is fitted to walker/transport chair 10 by placing it between forward leg members 12 with mounting notches 323 positioned over pins 328. Carry basket 300 can then be lowered such that pins 328 are received in grooves 316, and posts 332 contact the lower surface of slide members 324. In this position, the weight of carry basket 300 rests on pins 328 and posts 332.

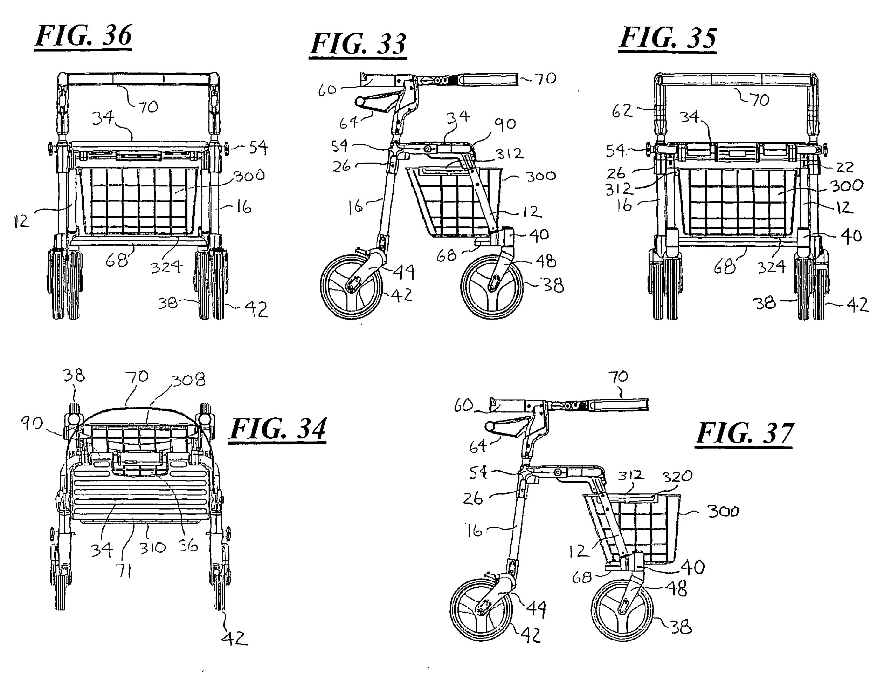

Carry basket 300 can be moved between the forward projecting position shown in Figure 37 and the retracted position shown in Figure 33 by grasping it at a suitable location, preferably the upper edge of front panel 308 and sliding it in the forward or rearward direction. Carry basket 300 is maintained in the fully forward projecting position when detents 322 engage pins 328 and detents 326 engage posts 332. Carry basket 300 is maintained in the fully retracted position when detents 320 engage pins 328 and detents 325 engage posts 332.

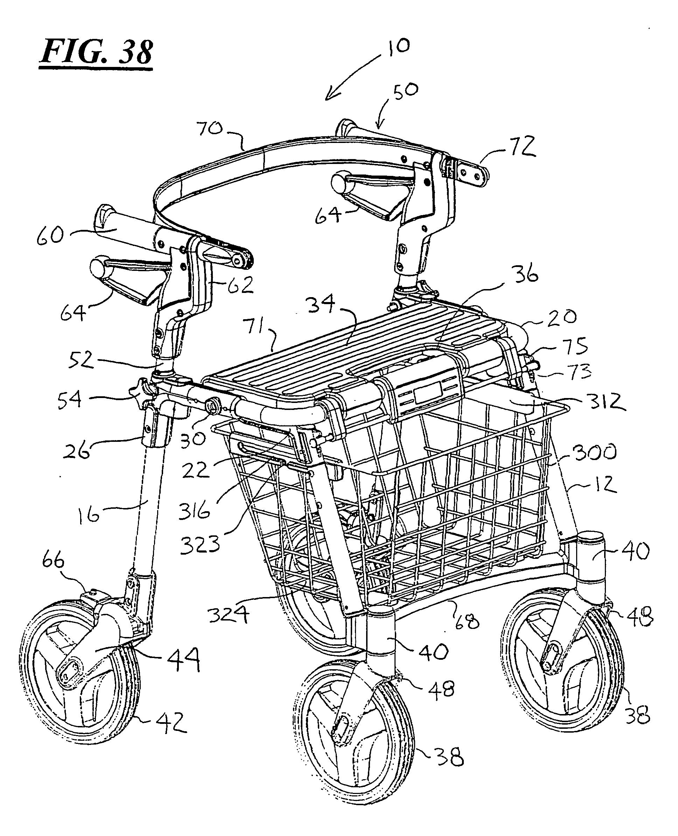

As shown in Figure 37, when in the forward projecting position, the upper opening of carry basket 300 is accessible permitting easy loading by the user. When in the retracted position as shown in Figure 33, carry basket 300 is substantially located beneath seating surface 34. This position provides important enhancement of manoeuvrability and stability, particularly when transporting heavy loads. In addition, when the walker/transport chair is used in the walker mode with the user standing behind the walker facing forward, the user can gain ready access to carry basket 300 by simply flipping up seating surface 34. Moreover, as shown in Figure 38, the walker/transport chair can be configured in the transport chair mode to accommodate a forward facing seated user. In such a mode, basket 300 may be placed into the retracted position so that it does not interfere with the user's legs.

If desired, carry basket 300 may be removed from walker/transport chair 10. This permits the basket to be loaded and unloaded at a point remote from walker/transport chair 10 or be used as a shopping basket. Carry basket 300 may be fitted with a carry handle (not shown) which can be pivotally connected to the central portion of rail members 312.

The frame design of walker 10 is particularly suitable for the sliding carry basket arrangement. Carry baskets which are mounted to the front leg members of conventional walkers usually require upper and lower mounting points. The upper mounting points can conveniently be at some location near the top of the front leg members or on an upper cross bar extending between the upper ends of the front leg members. The lower mounting points can conveniently be at some location near the bottom of the front leg members or on the lower cross bar extending between the lower ends of the front leg members. These upper and lower mounting points are spaced longitudinally, due to the rake or the angle that the front leg members are displaced from the vertical. In conventional walker design, the substantial longitudinal separation of these mounting points makes it impractical to provide for a sliding carry basket arrangement.

The longitudinal separation of the upper and lower mounting points limits the length of travel of the longitudinal sliding motion that the carry basket can undergo. As described above, front leg members 12 are positioned at an angle closer to vertical than are most conventional walkers and cross bar 68 is curved rearward. This minimizes the longitudinal separation between pins 328 and posts 332. As a result, carry basket 300 can be nested substantially under seating surface 34 before detents 320 engage pins 328 and detents 325 engage posts 332. Similarly, carry basket 300 can be extended substantially forward of seating surface 34 before detents 322 engage pins 328 and detents 326 engage posts 332. The relatively close longitudinal spacing of pins 328 and posts 332 does not unduly restrict the available sliding stroke length and thereby permits a much larger basket to be effectively mounted for sliding movement than would otherwise be possible.

The design of the walker/transport chair 10 permits the use of a novel and effective braking system. Conventional walkers use Bowden cables which extend from the hand grip mounted brake levers to the braking wheels. Bowden cables are relatively inexpensive and because they are flexible, can be installed with excess length in a free standing loop or bight to accommodate changes in length occasioned by the adjustment of handgrip height. However, the use of a Bowden cable arrangement has a number of disadvantages. The same free standing loop or bight that permits handgrip height adjustability is prone to being caught or hooked on various obstructions, particularly when the walker is loaded into, or unloaded from the trunk of a car. In addition, Bowden cables must be accurately adjusted and even a slight lack of adjustment can cause unsatisfactory braking action.

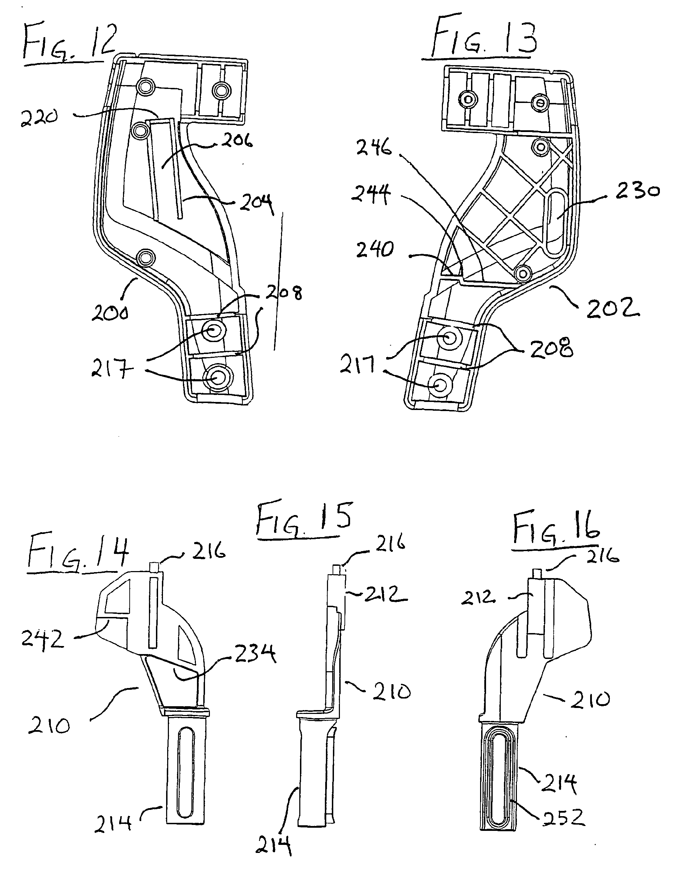

According to the present invention an internal brake actuating mechanism is used. Referring to Figures 12 and 13, handle housing 62 comprises right side housing shell 200 and left side housing shell 202 which are bolted at their lower ends to telescopic tube 52. Hand grip 60 is bolted between right side housing shell 200 and left side housing shell 202 at their upper ends. Brake lever 64 is retained between right side housing shell 200 and left side housing shell 202 in the manner described below.

Referring to Figure 12, the inside face of right side housing shell 200 is shown. Raised wall 204 forms an elongated groove 206 on the inside face with a longitudinal axis that is parallel to telescopic tube 52. Semicircular bearing surfaces 208 are formed in the lower portion of the inside face.

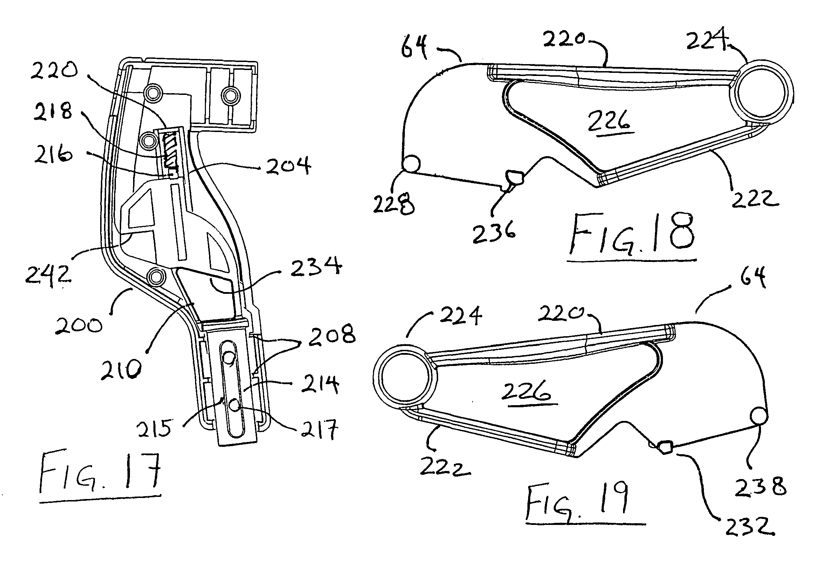

Referring to Figures 14 to 16, brake actuator 210 has raised tongue portion 212 which is sized to be slidably retained in elongated groove 206 of right side housing shell 200 and cylindrical portion 214 which is sized to be slidably retained in semicircular bearing surfaces 208 of right side housing shell 200.

Figure 17 shows the position of brake actuator 210 when it is slidably received in right side housing shell 200. Bias spring 218 is carried between retaining lug 216 formed at the upper end of brake actuator 210 and stop wall 220 formed at the upper end of groove 206 and biases brake actuator 210 in the downward direction. Brake actuator 210 has elongated aperture 215 formed through cylindrical portion 214. This elongated aperture 215 permits cylindrical portion 214 to extend down into telescopic tube 52 and allow bolts to pass through bolt holes 217 in right side housing shell 200, telescopic tube 52, elongated aperture 215, telescopic tube 52 and bolt holes 217 in left side housing shell without interfering with the vertical sliding motion of brake actuator 210. Such a through-bolting arrangement greatly improves the mechanical strength of the attachment of push handle assemblies 50 to telescopic tubes 52.

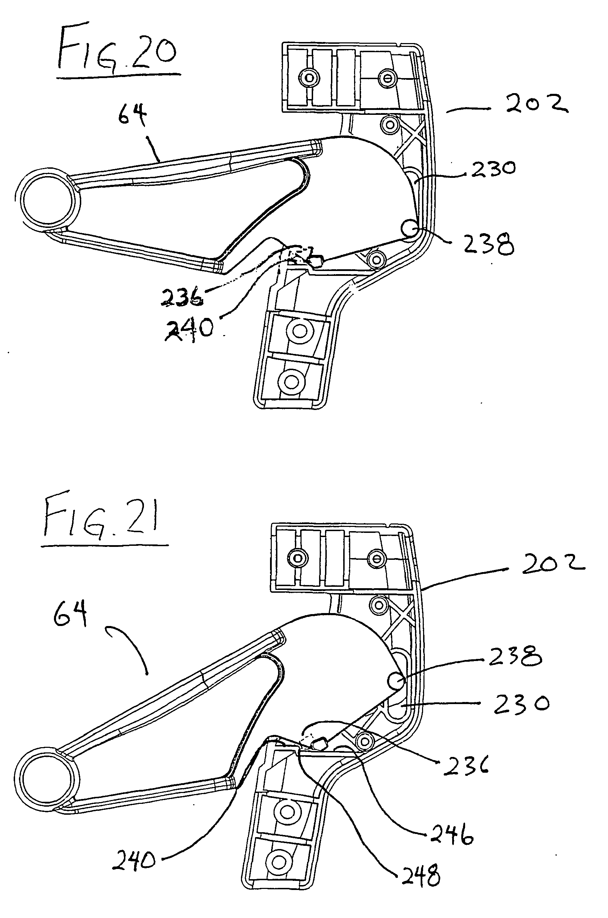

Referring to Figures 18 and 19, brake lever 64 comprises upper arm 220 and lower arm 222 joined at their rear extremities by ball shaped gripping projection 224. Brake lever 64 is shaped such that braking action, as more completely described below, can be effected by placing the hands on handle grips 50, inserting fingers through opening 226 and pulling up on upper arm 220 with inward gripping action. Downward pressure on lower arm 222 will move brake lever 64 downward into a locked or "parked" position, also as more completely described below. Ball shaped gripping projection 224 assists in moving brake lever in a downward direction by enabling the user to hook a thumb over the projection to apply downward force. This is particularly useful for a user with strength or mobility limitations in the hands.

Pivot pin 228 projects from the left side of brake lever 64 at its forward end and is sized to be received in slot 230 formed in the inside surface of left side housing shell 202. Brake actuating lug 232 projects from the right side of brake lever 64 and its upper surface engages downward facing abutment surface 234 formed in brake actuator 210. Camming lug 236 projects from the left side of brake lever 64. Brake lock actuating lug 238 projects from the right side of brake lever 64 at its forward end opposite pivot pin 228.

Referring to Figures 20 and 22, brake lever 64 is shown in the neutral position when no manual braking action is applied. In this position, the brake lever 64 projects rearwardly in a direction slightly below horizontal. Pivot pin 228 rests at the bottom of slot 230 in left side housing shell 202 and camming lug 236 (shown in phantom lines) rests on upward facing abutment surface 240 formed on the inside surface of left side housing shell 202. Brake lever 64 is retained in this position by the downward pressure of bias spring 218 acting on brake actuator 210, as can be seen with reference to Figure 17.

Downward facing abutment surface 242 (shown in phantom lines) formed in brake actuator 210 abuts the upper surface of brake lock actuating lug 238 (shown in phantom lines) formed in brake lever 64 and the downward action of bias spring 218 on brake actuator 210 urges pivot pin 228 to the bottom of slot 230. Similarly, downward facing abutment surface 234 (shown in phantom lines) formed in brake actuator 210 abuts the upper surface of brake actuating lug 232 (shown in phantom lines) formed in brake lever 64 and the downward action of bias spring 218 on brake actuator 210 urges camming lug 236 into engagement with upward facing abutment surface 240.

Thus in the neutral position as shown in Figures 20 and 22, brake lever 64 rests with pivot pin 228 at the bottom of slot 230 and camming lug 236 resting on upward facing abutment surface 240. Brake actuator 210 is urged downwardly by bias spring 218 and rests with downward facing abutment surface 242 resting on brake lock actuating lug 238 and downward facing abutment surface 234 resting on brake actuating lug 232.

Referring to Figure 23, brake lever 64 is shown in the braking position when manual braking action is applied. In this position, the brake lever 64 has been pivoted about pivot pin 228 in the bottom of slot 230 until the upper arm 220 of brake lever 64 is substantially horizontal. This pivoting action causes brake actuating lug 232 (shown in phantom lines) to raise brake actuator 210 by engagement with downward facing abutment surface 234 (shown in phantom lines). By manually releasing brake lever 64, bias spring 218 will urge brake actuator 210 back to the neutral position shown in Figure 22. The upward motion of brake actuator 210 between the neutral and braking positions is transmitted to rear wheel brake shoes 66 in a manner described below.

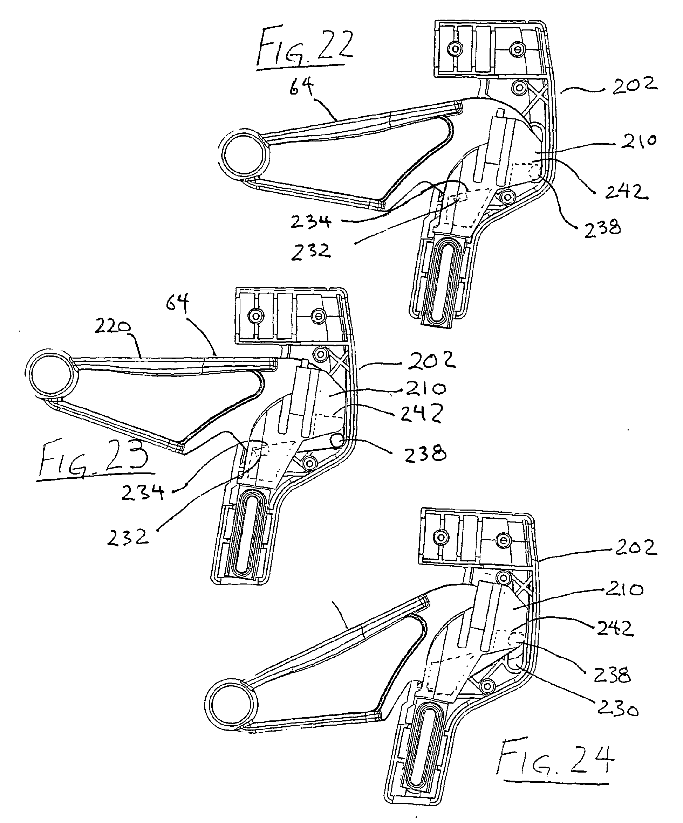

Referring to Figures 21 and 24, brake lever 64 is shown in the locked or "park" position. In this position, brake lever 64 has been pivoted down about camming lug 236 (shown in Figure 21 in phantom lines). This pivoting motion causes pivot pin 228 to move upward in slot 230 and draws camming lug 236 forward over upward facing abutment surface 240 onto lower abutment surface 246.

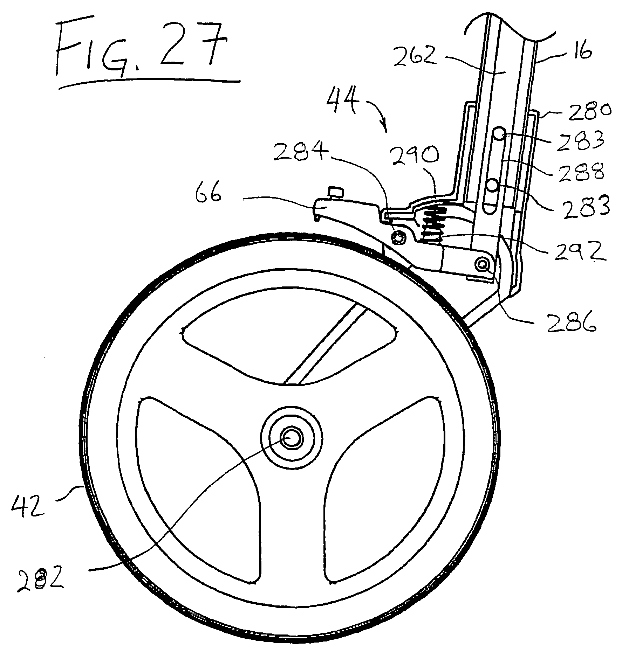

As can be seen with reference to Figure 24, this pivoting motion causes brake lock actuating lug 238 (shown in phantom lines) to raise brake actuator 210 by engagement with downward facing abutment surface 242 (shown in phantom lines). Brake lever 64 is retained in this locked or "park" position by the downward pressure of bias spring 218 acting on brake actuator 210 which urges camming lug 236 backwards into engagement with forward facing abutment surface 248. Downward bias is also provided by spring 290 (see Figure 27). By applying manual pressure to raise brake lever 64, camming lug 236 is raised over forward facing abutment surface 248 and returns to the neutral position shown in Figure 22. Thus, the sliding movement of camming lug 236 over forward facing abutment surface 248 provides an over-centre action to lock and unlock brake lever 64. The upward motion of brake actuator 210 between the neutral and lock or "park" positions is transmitted to rear wheel brake shoes 66, as described below.

As is evident from the foregoing description, the user can apply and release a braking force to the walker by pulling up and releasing brake lever 64, and can apply a constant braking force by pushing brake lever 64 down into the locked or "park" position.

Referring now to Figure 25, the manner in which the upward motion of brake actuator 210 is transmitted to rear wheel brake shoe 66 is shown. Brake actuator 210 is bolted in the upper end of telescopic tube 52 as described above. Telescopic tube 52 is slidably received inside rear leg member 16. Rear leg member 16 is fixedly attached to fixed rear leg bracket 26 in a manner that leaves the inside volume of rear leg member 16 open to permit telescopic tube 52 to slide therein. For example, bosses having threaded sockets can be provided on the outer surface of rear leg member 16 and corresponding keyway can be formed in fixed rear leg bracket 26 to receive such bosses. Leg 16 and bracket 26 can then be secured by bolting through an aperture in the keyway into the threaded sockets.

Telescopic tube 52 is provided with a series of evenly spaced holes 254 along a portion of its length. Fixed rear leg bracket 26 has a transverse bore 256 formed in each side, with the inner bore being internally threaded to receive the threaded end of thumb screw 54 (see Figure 1). Handgrip assembly 50 may be fixed at the desired height by aligning a selected hole 254 in telescopic tube 52 with bore 256 in bracket 26. Thumb screw 54 is inserted into the outer bore 256 of bracket 26, through the selected hole 254 in telescopic tube 52, and is screwed into the threaded inner bore 256 on the opposite side of bracket 26.

This arrangement provides for a secure manner of adjustably attaching handgrip assembly 50 to the fixed rear leg bracket 26 of the walker. The use of thumb screw 54 which passes entirely through telescopic tube 52 and is threaded into the opposite side of bracket 26 distributes the load applied by the user on handgrip assemblies 50 evenly across bracket 26. This is a far more durable means of attachment than that one which merely secures the telescopic tube by a thumbscrew which passes through one wall of the bracket and squeezes against the outer surface of the telescopic tube. A solid attachment between the telescopic tube 52 and bracket 26 is extremely important not only for reasons of durability and safety, but also because of the sense of security imparted to the user. Users are far less willing to accept a walker if the handgrip assemblies feel loose or flimsily mounted. While the through-bolt arrangement of thumbscrew 54 does offer enhanced durability, it does requires a special arrangement to permit brake actuation internally within telescopic tube 52.

Referring to Figure 25, brake wire 250 is formed in an inverted "U" shape with its bight at its upper end being retained in groove 252 formed in the cylindrical portion 214 of actuator 210. Downwardly extending legs 258 and 260 of brake wire 250 are attached to brake rod 262 by means of clamp 264. Brake rod 262 is an elongated "U" shaped channel member.

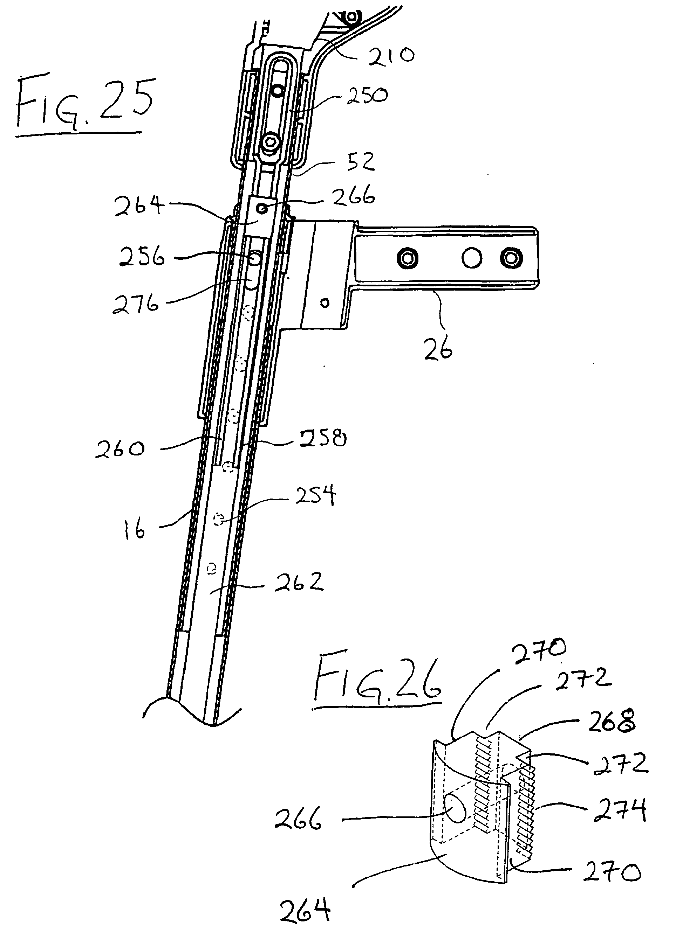

Referring to Figure 26, clamp 264 has back surface 268 and side surfaces 270 which are sized to be closely received in the "U" channel of brake rod 262. Recesses 272 are provided to accommodate downwardly extending legs 258 and 260 of brake wire 250 and teeth 274 are formed in recesses 272 to grip brake wire 250. Clamp 264 is drawn tight against the upper end of brake rod 262 by means of Allen screw 266 and teeth 274 trap and secure brake wire 250 to brake rod 262. Allen screw 266 is axially aligned with the first hole 254 in telescopic tube 52 above bracket 26 permitting a wrench or key to be inserted therethrough for the purpose of loosening or tightening clamp 264. Brake wire 250 can advantageously be formed of wound steel piano wire (e.g. 2.29 mm (0.09 inch) diameter) as the ridged surface thereof can be securely gripped by teeth 274.

Elongated slot 276 is formed in the centre web of brake rod 262. Thumbscrew 54 which is threaded into transverse bore 256 passes through slot 276. Slot 276 is sized as to permit brake rod 262 to be displaced longitudinally by the upward and downward movement of brake actuator 210 without contacting thumbscrew 54.

In order to adjust the height of handgrip assemblies 50, a key or wrench is inserted through hole 254 above bracket 26 and Allen screw 266 is loosened to permit relative longitudinal movement between brake wire 250 and brake rod 262. Thumb screw 54 is then unscrewed and withdrawn from transverse bore 256. Telescopic tube is then raised or lowered until the desired hole 254 is axially aligned with transverse bore 256 and thumbscrew 54 is re-inserted and tightened to secure telescopic tube 52 in bracket 26. Finally, Allen screw 266 is tightened to secure brake wire 250 to brake rod 262.

Referring to Figure 27, rear fork assembly 44 comprises inner and outer fork housings 280 (only one of which is shown in Figure 20) between which rear wheel 42 is mounted for rotation about axle 282. Rear fork assembly 44 is attached to rear leg member 16 by means of through-bolts (not shown) which pass through holes 283 in the fork housings and rear leg member 16. Brake shoe 66 is pivotally mounted on shaft 284 which is transversely secured between fork housings 280. Brake rod 262 is connected at its bottom end to brake shoe 66 at pivot point 286. Elongated slot 288 is provided in the centre web of brake rod 262 to permit the through-bolts to pass therethrough and is sized to permit brake rod 262 to be displaced longitudinally by the upward and downward movement of brake actuator 210 without contacting the through-bolts. Spring 290 is retained between lug 292 and housing 280 and biases brake shoe out of engagement with rear wheel 42.

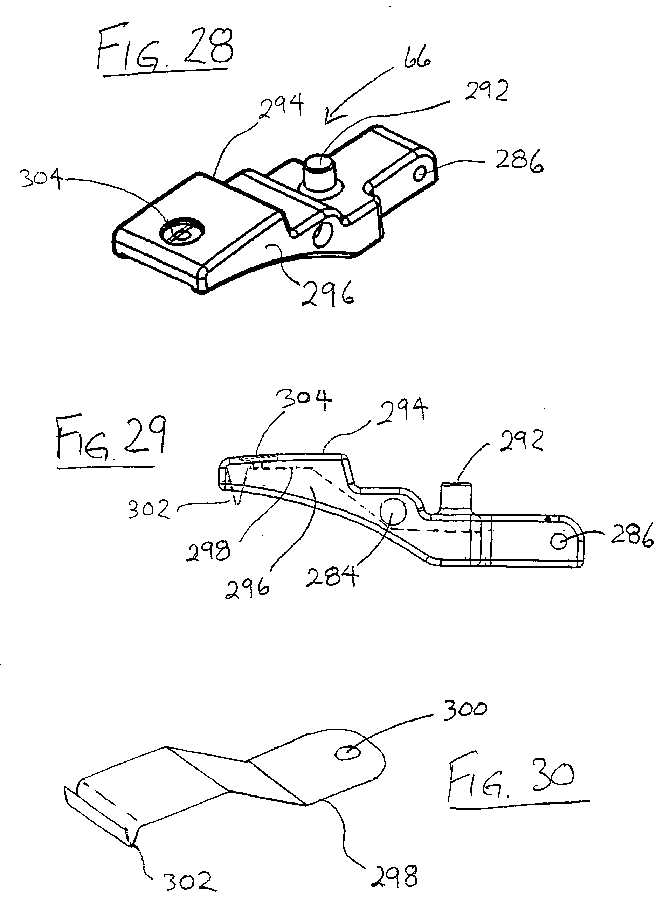

Referring to Figures 28 to 30, the details of brake shoe 66 can be more readily seen. Brake shoe 66 has a horizontally disposed upper surface 294 an vertical sidewalls 296 which together bound a downwardly open cavity. Friction member 294 is carried within said cavity and is attached thereto at point 300. Friction member 294 has downwardly protruding tang 302 at its rearward end. Adjusting screw 304 is threaded through the upper surface 294 of brake shoe 66 and contacts the upper surface of friction member 294. The extent to which tang 302 protrudes below brake shoe 66 can be varied by turning adjusting screw 304 in or out. This adjustability permits fine tuning of the braking action and compensates for tire wear.

When brake rod 262 is moved upwardly by the operation of brake lever 64, brake shoe 66 is caused to pivot about shaft 284 forcing tang 302 downward into frictional engagement with rear wheel 42. When brake lever 64 is released and returns to its neutral position, brake rod 262 moves downwardly and brake shoe 66 pivots out of frictional engagement with rear wheel 42. In this manner, braking action is transmitted from brake lever 64 to brake shoe 66 internally of telescopic tube 52 and rear leg member 16.

While the present invention has been described with reference to the embodiments disclosed in the Figures, it will be understood that variations and modifications may be made without necessarily departing from the scope of the invention as claimed. Accordingly, the scope of the invention is to be determined in accordance with the claims appended hereto.

## Claims

1. A walker comprising:
a longitudinal axis in the forward and rearward directions;
a pair of front wheels (38) evenly spaced on either side of said longitudinal axis along a front transverse axis and rotatably mounted at the lower ends of a pair of upwardly extending tubular front leg members (12);
a pair of rear wheels (42) evenly spaced on either side of said longitudinal axis along a rear transverse axis and rotatably mounted at the lower ends of a pair of upwardly extending tubular rear leg members (16);
a pair of height adjustable tubular handle bar members (52) slidably received for telescopic movement within the upper ends of said rear leg members (16);
a pair of rear brackets (26) for supporting a horizontally disposed seating surface (34), each of said rear brackets having a tubular cavity adapted to be fixedly secured about the upper end of said rear leg member and adjustably secured about a portion of the tubular handle bar member projecting upwardly therefrom;
a transverse aperture (256) formed through opposite sides of each said rear bracket;
a plurality of transverse apertures (254) formed through opposite sides along a portion of the length of each said handle bar member;
a handle bar securing pin (54) adapted to be inserted through aligned apertures in said rear bracket and said handle bar member for retaining said handle bar member at a selected height;
a brake actuator assembly disposed at the upper end of each said handle bar members;
a braking member (66) disposed at the lower end of each said rear leg member adapted to be moved between a first position out of braking engagement with said rear wheel and a second position into braking engagement with said rear wheel;
a length adjustable rod member (262, 250) responsive to movement of said brake actuator assembly for moving said braking member between said first and second positions, said rod member extending inside said tubular handle bar member and said tubular rear leg member from said brake actuator assembly, about said handle bar securing pin to said braking member.

2. The walker of claim 1 wherein the handle bar securing pin (54) is threadingly engaged at its distal end to said rear bracket.

3. The walker of claim 1 wherein said rod member (262) comprises an elgongated slot (276) disposed about said handle bar securing pin to permit longitudinal movement of said rod responsive to movement of said brake actuator assembly.

4. The walker of claim 1 wherein said length adjustable rod member comprises upper and lower portions (250, 262) in telescoping engagement and clamp means (266) for releasably securing said portions in fixed length relation.

5. The walker of claim 4 wherein said clamp means (266) is aligned with one of said apertures in said handle bar member to permit access for releasably securing said rod member.

6. The walker of claim 1 wherien said rear wheels are mounted to fork assemblies (280) fixed to the lower end of said rear leg members (16) by through-bolts passing through said leg members and said rod member (262) comprises an elongated slot (288) disposed about said through-bolt to permit longitudinal movement of said rod responsive to movement of said brake actuator assembly.

7. The walker of claim 6 wherein said fork assembly (280) comprises means for biasing (290) said braking member out of braking engagement with said rear wheel.

8. The walker of claim 1 including a friction member (294) fixed to said braking member (66) for engagement with the surface of said rear wheel and a means for adjusting the distance between said friction member and said wheel.

9. The walker of claim 8 wherein the means for adjusting is a screw adjuster (304) between the braking member and the friction member.

10. A walker according to claim 1 wherein said brake actuator assembly comprises:
a housing (62);
a brake lever (64) having a forward end retained in said housing and a handle projecting from the rear of said housing, and manually operable between a neutral position, a raised brake actuating position and a depressed brake locking position;
said brake lever having a first pivot means (228) and a first abutment surface (238) located near the forward end of said brake lever, and a second pivot means (236) and a second abutment surface located intermediate the forward end and the handle of said brake lever; whereby when said handle is raised from said neutral position to said brake actuating position said brake lever pivots about said first pivot means and said second abutment surface is moved to a raised position and when said handle is depressed from said neutral position to said brake locking position said brake lever pivots about said second pivot means and said first abutment surface is moved to a raised position;
a brake actuating slide member (210) retained in said housing having a third abutment surface (234) in opposed relation with said first abutment surface whereby said upward movement thereof moves said slide upward along said axis and having a fourth abutment surface in opposed relation with said second abutment surface whereby said upward movement thereof moves said slide upward along said axis;
releasable locking means for retaining said brake lever in said brake locking position.

11. The walker of claim 10 wherein said releasable locking means comprises bias means (218) for urging said second pivot means in a first direction and wherein movement of said handle from said neutral position to said brake locking position moves said second pivot means lever against said bias means from an unlocked first position to a locked second position.

12. The walker of claim 11 wherein said second pivot means is biased against a stepped abutment surface (248) and movement of said handle from said neutral position to said brake locking position causes said second pivot means to slide over the step and be retained thereagainst by said bias means.

13. The walker of claim 12 including guide means (230) formed in said housing and engaging said brake lever for causing sliding movement of said second pivot means over said stepped abutment surface when said handle is moved from said neutral position to said brake locking position.

14. The walker of claim 13 wherein said guide means is a linear slot for receiving said first pivot means.

## Patentansprüche

1. Gehwagen, enthaltend:
eine Längsachse in der Vorwärts- und Rückwärtsrichtung;
ein Paar von Vorderrädern (38), die gleichmäßig beabstandet auf jeder von beiden Seiten der Längsachse entlang einer vorderen Querachse sind und drehbar an den unteren Enden eines Paars von sich nach oben erstreckenden röhrenförmigen Vorderarmelementen (12) montiert sind; ein Paar von Hinterrädern (42), die gleichmäßig beabstandet auf jeder von beiden Seiten der Längsachse entlang einer rückwärtigen Querachse sind und drehbar an unteren Enden eines Paars von sich nach oben erstreckenden röhrenförmigen Hinterarmelementen (16) montiert sind; ein Paar von höhenjustierbaren röhrenförmigen Handstabelementen (52), die verschiebbar zur Teleskopbewegung innerhalb der oberen Enden der hinteren Armelemente (16) aufgenommen sind;
ein Paar von hinteren Klammern (26) zum Stützen einer horizontal angebrachten Sitzoberfläche (34), wobei jede der hinteren Klammern eine röhrenförmige Ausnehmung aufweist, die dazu angepasst ist, fest um das obere Ende des hinteren Armelements befestigt zu werden und justierbar um einen Bereich des röhrenförmigen Handstabelements angebracht zu werden, der nach oben davon vorsteht;
eine Queröffnung (256), die durch gegenüberliegende Seiten von jeder der hinteren Klammern geformt ist;
eine Mehrzahl von Queröffnungen (254), die durch gegenüberliegende Seiten entlang eines Bereichs einer Länge von jedem der Handstabelemente geformt sind;
einen Handstabbefestigungsstift (54), der dazu angepasst ist, durch ausgerichtete Öffnungen in der hinteren Klammer und dem Handstabelement zum Halten des Handstabelements in einer gewählten Höhe eingeführt zu werden;
eine Bremsstellgliedanordnung, die an dem oberen Ende von jedem der Handstabelemente angebracht ist;
ein Bremselement (66), dass an dem unteren Ende von jedem der hinteren Armelemente angebracht ist, das dazu angepasst ist, zwischen einer ersten Position ohne Bremseingriff mit dem Hinterrad und einer zweiten Position in Bremseingriff mit dem Hinterrad bewegt zu werden;
ein längenjustierbares Stabelement (262, 250), das auf die Bewegung der Bremsstellgliedanordnung zum Bewegen des Bremselements zwischen der ersten und der zweiten Position ansprechend ist, wobei sich das Stabelement im Inneren des röhrenförmigen Handstabelements und
dem röhrenförmigen hinteren Armelement von der Bremsstellgliedanordnung um den Handstabbefestigungsstift zu dem Bremselement erstreckt.

2. Gehwagen nach Anspruch 1, wobei der Handstabbefestigungsstift (54) in Gewindeeingriff an seinem distalen Ende mit der hinteren Klammer ist.

3. Gehwagen nach Anspruch 1, wobei das Stabelement (262) einen lang gestreckten Schlitz (276) enthält, der um den Handstabbefestigungsstift angebracht ist zum Erlauben einer Längsbewegung des Stabs ansprechend auf die Bewegung der Bremsstellgliedanordnung.

4. Gehwagen nach Anspruch 1, wobei das längenjustierbare Stabelement einen oberen und unteren Bereich (250, 262) in Teleskopeingriff und ein Klemmenmittel (266) zum lösbaren Sichern der Bereiche in einem festgelegten Längenverhältnis enthält.

5. Gehwagen nach Anspruch 4, wobei das Klemmenmittel (266) mit einer der Öffnungen in dem Handstabelement zum Erlauben eines Zugangs zum lösbaren Sichern des Stabelements ausgerichtet ist.

6. Gehwagen nach Anspruch 1, wobei die Hinterräder an Gabelanordnungen (280) montiert sind, die an dem unteren Ende der hinteren Armelemente (16) durch Durchgangsbolzen befestigt sind, die durch die Armelemente laufen, und das Stabelement (262) einen lang gestreckten Schlitz (288) enthält, der um den Durchgangsbolzen angebracht ist zum Erlauben einer Längsbewegung des Stabs ansprechend auf die Bewegung der Bremsstellgliedanordnung.

7. Gehwagen nach Anspruch 6, wobei die Gabelanordnung (280) ein Mittel zum Vorbelasten (290) des Bremselements aus dem Bremseingriff mit dem Hinterrad enthält.

8. Gehwagen nach Anspruch 1, enthaltend ein Reibelement (294), das an dem Bremselement (66) zu einem Eingriff mit der Oberfläche des Hinterrads befestigt ist, und ein Mittel zum Justieren des Abstands zwischen dem Reibelement und dem Rad.

9. Gehwagen nach Anspruch 8, wobei das Mittel zum Justieren eine Schraubeneinstelleinrichtung (304) zwischen dem Bremselement und dem Reibelement ist.

10. Gehwagen nach Anspruch 1, wobei die Bremsstellgliedanordnung enthält:
ein Gehäuse (62);
einen Bremshebel (64), der ein vorderes Ende, das in dem Gehäuse gehalten ist, und einen Handgriff, der von hinten von dem Gehäuse vorsteht, aufweist, und der zwischen einer neutralen Position, einer erhabenen Bremsbetätigungsposition und einer niedergedrückten Bremsarretierposition von Hand betätigbar ist;
wobei der Bremshebel ein erstes Schwenkmittel (228) und eine erste Anschlagoberfläche (238), die sich in der Nähe des vorderen Endes des Bremshebels befindet, aufweist, und ein zweites Schwenkmittel (236) und eine zweite Anschlagoberfläche, die zwischen dem vorderen Ende und dem Handgriff des Bremshebels positioniert ist, aufweist; wobei, wenn der Handgriff aus der neutralen Position in die Bremsbetätigungsposition angehoben ist, der Bremshebel um das erste Schwenkmittel schwenkt und die zweite Anschlagoberfläche in eine erhabene Position bewegt wird, und wenn der Handgriff aus der neutralen Position in die Bremsarretierposition niedergedrückt wird, der Bremshebel um das zweite Schwenkmittel schwenkt und die erste Anschlagoberfläche in eine erhabene Position bewegt wird;
ein Bremsbetätigungsgleitelement (210), das in dem Gehäuse gehalten wird, das eine dritte Anschlagoberfläche (234) in gegenüberliegendem Verhältnis zu der ersten Anschlagoberfläche aufweist, wobei die Bewegung nach oben davon das Gleitstück nach oben entlang der Achse bewegt, und eine vierte Anschlagoberfläche in einem gegenüberliegenden Verhältnis zu der zweiten Anschlagoberfläche aufweist, wobei die Bewegung nach oben davon das Gleitstück nach oben entlang der Achse bewegt;
ein lösbares Arretiermittel zum Halten des Bremshebels in der Bremsarretierposition.

11. Gehwagen nach Anspruch 10, wobei das lösbare Arretiermittel ein Vorbelastungsmittel (218) zum Drücken des zweiten Schwenkmittels in einer ersten Richtung enthält, und wobei die Bewegung des Handgriffs aus der neutralen Position in die Bremsarretierposition den zweiten Schwenkmittelhebel gegen das Vorbelastungsmittel aus einer nicht arretierten ersten Position in eine arretierte zweite Position bewegt.

12. Gehwagen nach Anspruch 11, wobei das zweite Schwenkmittel gegen eine gestufte Anschlagoberfläche (248) vorbelastet ist und die Bewegung des Handgriffs aus der neutralen Position in die Bremsarretierposition bewirkt, dass das zweite Schwenkmittel über die Stufe rutscht und durch das Vorbelastungsmittel dagegen gehalten wird.

13. Gehwagen nach Anspruch 12, enthaltend ein Führungsmittel (230), das in dem Gehäuse gebildet ist und in Eingriff mit dem Bremshebel gelangt zum Bewirken der Gleitbewegung des zweiten Schwenkmittel über die gestufte Anschlagoberfläche, wenn der Handgriff aus der neutralen Position in die Bremsarretierposition bewegt wird.

14. Gehwagen nach Anspruch 13, wobei das Führungsmittel ein linearer Schlitz zum Aufnehmen des ersten Schwenkmittels ist.

## Revendications

1. Déambulateur comprenant :
un axe longitudinal dans les directions avant et arrière ;
une paire de roues avant (38) espacées de manière égale de chaque côté dudit axe longitudinal le long d'un axe transversal avant et montées à rotation aux extrémités inférieures d'une paire de pieds avant tubulaires s'étendant vers le haut (12) ;
une paire de roues arrière (42) espacées de manière égale de chaque côté dudit axe longitudinal le long d'un axe transversal arrière et montées à rotation aux extrémités inférieures d'une paire de pieds arrière tubulaires s'étendant vers le haut (16) ;
une paire d'éléments de guidon tubulaires réglables en hauteur (52) logés de manière glissante pour un mouvement télescopique à l'intérieur des extrémités supérieures desdits pieds arrière (16) ;
une paire de supports arrière (26) pour supporter une surface d'assise disposée horizontalement (34), chacun desdits supports arrière ayant une cavité tubulaire adaptée pour être fermement fixée autour de l'extrémité supérieure dudit pied arrière et fixée de manière réglable autour d'une partie de l'élément de guidon tubulaire faisant saillie vers le haut depuis celle-ci ;
une ouverture transversale (256) formée à travers les côtés opposés de chaque support arrière ;
une pluralité d'ouvertures transversales (254) formées à travers des côtés opposés le long d'une partie de la longueur de chaque élément de guidon ;
une vis de fixation de guidon (54) prévue pour être insérée dans les ouvertures alignées dudit support arrière et dudit élément de guidon à une hauteur choisie ;
un ensemble d'actionnement de frein placé à l'extrémité supérieure de chacun desdits éléments de guidon ;
un élément de freinage (66) placé à l'extrémité inférieure de chaque pied arrière prévu pour être actionné entre une première position hors de contact de freinage avec ladite roue arrière et une deuxième position en contact de freinage avec ladite roue arrière ;
une tige réglable en longueur (262, 250) répondant au mouvement dudit ensemble d'actionnement de frein pour déplacer ledit élément de freinage entre lesdites première et deuxième positions, ladite tige s'étendant à l'intérieur dudit élément de guidon tubulaire et dudit pied arrière tubulaire depuis ledit ensemble d'actionnement de frein, autour de ladite vis de fixation de guidon, jusqu'audit élément de freinage.

2. Déambulateur selon la revendication 1, dans lequel la vis de fixation de guidon (54) est vissée à son extrémité distale audit support arrière.

3. Déambulateur selon la revendication 1, dans lequel ladite tige (262) comprend une fente allongée (276) disposée autour de ladite vis de fixation de guidon pour permettre le mouvement longitudinal de ladite tige en réponse au mouvement dudit ensemble d'actionnement de frein.

4. Déambulateur selon la revendication 1, dans lequel ladite tige réglable en longueur comprend des parties supérieure et inférieure (250, 262) en agencement télescopique et un moyen de serrage (266) pour fixer de manière amovible lesdites parties en relation de longueur fixe.

5. Déambulateur selon la revendication 4, dans lequel ledit moyen de serrage (266) est aligné avec l'une desdites ouvertures dudit élément de guidon pour permettre un accès pour fixer de manière amovible ladite tige.

6. Déambulateur selon la revendication 1, dans lequel lesdites roues arrière sont montées sur des ensembles de fourche (280) fixés à l'extrémité inférieure desdits pieds arrière (16) par des boulons traversants qui traversent lesdits pieds et ladite tige (262) comprend une fente allongée (288) disposée autour dudit boulon traversant pour permettre le mouvement longitudinal de ladite tige en réponse au mouvement dudit ensemble d'actionnement de frein.

7. Déambulateur selon la revendication 6, dans lequel ledit ensemble de fourche (280) comprend un moyen pour écarter (290) ledit élément de freinage hors de son contact de freinage avec ladite roue arrière.

8. Déambulateur selon la revendication 1, comprenant un élément de friction (294) fixé audit élément de freinage (66) pour entrer en contact avec la surface de ladite roue arrière et un moyen pour régler la distance entre ledit élément de friction et ladite roue.

9. Déambulateur selon la revendication 8, dans lequel le moyen de réglage est une vis de réglage (304) entre l'élément de freinage et l'élément de friction.

10. Déambulateur selon la revendication 1, dans lequel ledit ensemble d'actionnement de frein comprend :
un boîtier (62) ;
un levier de frein (64) ayant une extrémité avant retenue dans ledit boîtier et une poignée faisant saillie depuis l'arrière dudit boîtier, et actionnable manuellement entre une position neutre, une position relevée, ou d'actionnement de frein, et une position enfoncée, ou de verrouillage de frein ;
ledit levier de frein ayant un premier moyen de pivot (228) et une première surface d'appui (238) située près de l'extrémité avant dudit levier de frein, et un deuxième moyen de pivot (236) et une deuxième surface d'appui située entre l'extrémité avant et la poignée dudit levier de frein, moyennant quoi, lorsque ladite poignée est levée de ladite position neutre à ladite position d'actionnement de frein, ledit levier de frein pivote autour dudit premier moyen de pivot et ladite deuxième surface d'appui est déplacée jusqu'à une position levée et quand ladite poignée est enfoncée de ladite position neutre à ladite position de verrouillage de frein, ledit levier de frein pivote autour dudit deuxième moyen de pivot et ladite première surface d'appui est déplacée jusqu'à une position levée ;
un élément glissant d'actionnement de frein (210) retenu dans ledit boîtier ayant une troisième surface d'appui (234) en face de ladite première surface d'appui, moyennant quoi ledit mouvement vers le haut de celui-ci déplace ledit élément glissant vers le haut le long dudit axe et ayant une quatrième surface d'appui en face de ladite deuxième surface d'appui, moyennant quoi ledit mouvement vers le haut de celui-ci déplace ledit élément glissant vers le haut le long dudit axe ;
un moyen de verrouillage libérable pour retenir ledit levier de frein dans ladite position de verrouillage de frein.

11. Déambulateur selon la revendication 10, dans lequel ledit moyen de verrouillage libérable comprend un moyen de rappel (218) pour pousser ledit deuxième moyen de pivot dans une première direction et dans lequel le mouvement de ladite poignée de ladite position neutre vers ladite position de verrouillage de frein déplace le levier dudit deuxième moyen de pivot contre ledit moyen de rappel, d'une première position non verrouillée à une deuxième position verrouillée.

12. Déambulateur selon la revendication 11, dans lequel ledit deuxième moyen de pivot est poussé contre une surface d'appui en épaulement (248) et le mouvement de ladite poignée de ladite position neutre à ladite position de verrouillage de frein fait glisser ledit deuxième moyen de pivot sur l'épaulement et la fait rester contre ce dernier par l'intermédiaire dudit moyen de rappel.

13. Déambulateur selon la revendication 12, comprenant un moyen de guidage (230) formé dans ledit boîtier et qui se met en contact avec ledit levier de frein pour provoquer le mouvement glissant dudit deuxième moyen de pivot sur ladite surface d'appui en épaulement lorsque ladite poignée est déplacée de ladite position neutre à ladite position de verrouillage de frein.

14. Déambulateur selon la revendication 13, dans lequel ledit moyen de guidage est une fente linéaire destinée à recevoir ledit premier moyen de pivot.
